Europäisches Patentamt

European Patent Office

Office européen des brevets

(11) Veröffentlichungsnummer: **0 470 382 A1**

## (12) EUROPÄISCHE PATENTANMELDUNG

(21) Anmeldenummer: **91111449.4**

(22) Anmeldetag: **10.07.91**

(51) Int. Cl.5: **B64D 1/06**

(30) Priorität: **08.08.90 DE 4025094**

(43) Veröffentlichungstag der Anmeldung:
**12.02.92 Patentblatt 92/07**

(84) Benannte Vertragsstaaten:
**ES FR GB IT**

(71) Anmelder: **Messerschmitt-Bölkow-Blohm Gesellschaft mit beschränkter Haftung Robert-Koch-Strasse W-8012 Ottobrunn(DE)**

(72) Erfinder: **Christof, Horst Breitensteinstrasse 9 W-8022 Grünwald(DE)**
Erfinder: **Breithaupt, Rupert Sonnblick 13 W-8011 Egmating(DE)**
Erfinder: **Harraeus, Egbert Anzengruberstrasse 71 W-8014 Neubiberg(DE)**

(54) Einrichtung zum Ausstoss von Minen aus Drehflüglern und Starrflüglern.

(57) Die Erfindung bezieht sich auf eine Einrichtung (10) zum Ausstoß von Minen aus Drehflüglern und Starrflüglern (FK), wobei die Minen (16) in fahrbaren Containern (12) gelagert, aus diesen entnommen und einer Ausstoßeinrichtung zugeführt werden. Das Wesen der Erfindung besteht aus einer mehrbahnigen Förderbandanlage (11), die insgesamt verschiebbar im Transportraum (TR) des Flugkörpers unter dem im Ladeschwerpunkt fixierten Minencontainerschlitten gelagert ist und dessen Minen auf- oder mitnehmen kann, wobei die Förderanlage an ihrem ausstoßseitigen Ende eine Minenverteileinheit (13) aufweist, von wo die Minen mit gewählter Geschwindigkeit, Umlenkung oder Spannkraft ausgeworfen werden.

FIG. 3b

EP 0 470 382 A1

Die Erfindung bezieht sich auf eine Einrichtung zum Ausstoß von Minen aus Drehflüglern und Starrflüglern gemäß dem Gattungsbegriff des Anspruchs 1.

Durch die DE-PS 31 27 674 ist eine Vorrichtung zum Belegen einer Zielfläche mit Munition bekannt, bei der Wirkkörper durch behälterseitige Ausbringöffnungen hindurch ausgestoßen werden. Die in Aufnahmekonstruktionen lagernden Wirkkörper werden darin um eine quer zur Ausstoßrichtung liegende Achse in Rotation gebracht. Diese Aufnahmen weisen eine Zahnstange oder einen Zahnriemen als Führungmittel für die Wirkkörper auf. Abgesehen vom konstruktiven Aufwand dieser Einrichtung, ist das Gewicht solcher Anlagen viel zu hoch und mindert dadurch die Nutzlastaufnahme.

Aus der US-PS 4 161 301 ist eine Ausstoßeinrichtung für Munition bekannt, bei der auf parallelliegenden Transportschienen Minencontainer über ein Zahngetriebe zur Abwurfstelle transportiert werden. Eine ähnliche Transportanlage offenbart die US-PS 33 71 891, an deren Stahlschienenkonstruktion die abzuwerfende Last verschiebbar angehängt wird. Beide Ausführungsformen sind im Bau- und Gewichtsaufwand sehr hoch.

Der vorliegenden Erfindung liegt die Aufgabe zugrunde, eine Minenausstoßeinrichtung der eingangs genannten Art aufzuzeigen, bei der die Nachteile des Standes der Technik beseitigt sind und eine einfache, zuverlässige und im Gewicht wesentlich reduzierte Einrichtung zum Verlegen von variablen Minenfeldern geschaffen ist.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung werden Ausführungsbeispiele erläutert und in den Figuren der Zeichnung skizziert. Es zeigen:

Fig. 1a ein Schemabild einer Seitenansicht eines mit einem ausfahrbaren Minencontainer und einer Minenausstoßeinrichtung versehenen Hubschraubers in Auswurfstellung,

Fig. 1b ein Schemabild gemäß Fig. 1a in Transportstellung in Draufsicht,

Fig. 1c ein Schemabild gemäß Fig. 1a in Rückansicht mit geöffneter Ladeluke,

Fig. 2a einen Teilquerschnitt des Ausstoßendteils in einem Ausführungsbeispiel,

Fig. 2b einen Teilquerschnitt des Ausstoßendteils in einem weiteren Ausführungsbeispiels,

Fig. 3a ein Schemabild einer Seitenansicht eines mit einem weiteren Ausführungsbeispiel einer Minenausstoßeinrichtung bestückten Hubschraubers in Auswurfstellung,

Fig. 3b ein Schemabild gemäß Fig. 3a in Draufsicht mit abgenommenem Zellendach und Rotor in Transportstellung,

Fig. 3c ein Schemabild gemäß Fig. 3a in Rückansicht mit geöffneter Ladeluke,

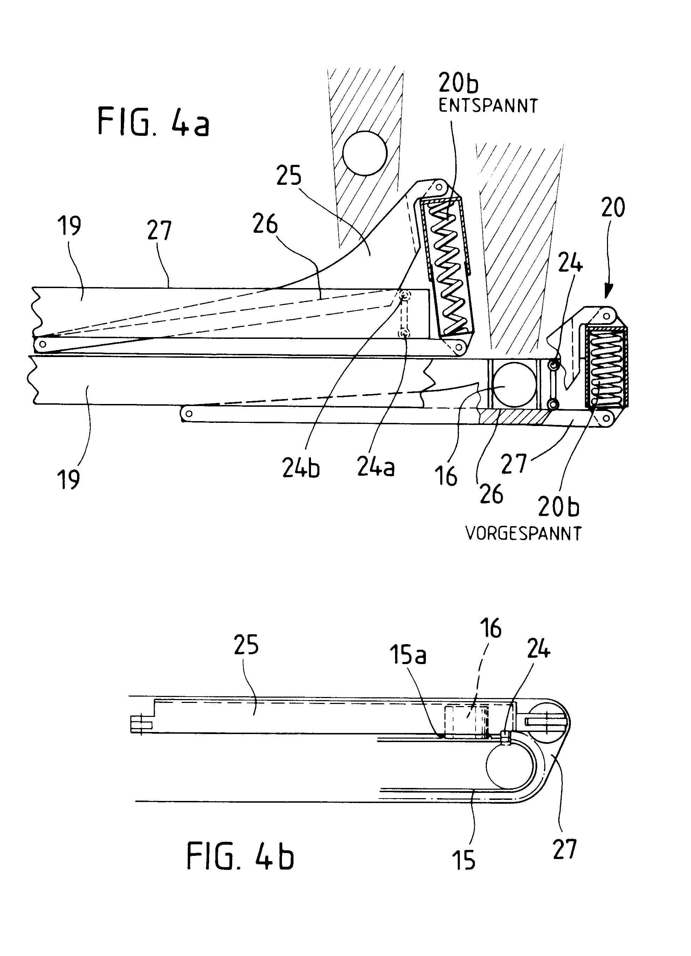

Fig. 4a einen Teilquerschnitt des Ausstoßendteils in einem Ausführungsbeispiel in gespannter und entspannter Wirkstellung in Draufsicht,

Fig. 4b einen Teilquerschnitt des Ausstoßendteils gemäß Fig. 4a in Seitenansicht.

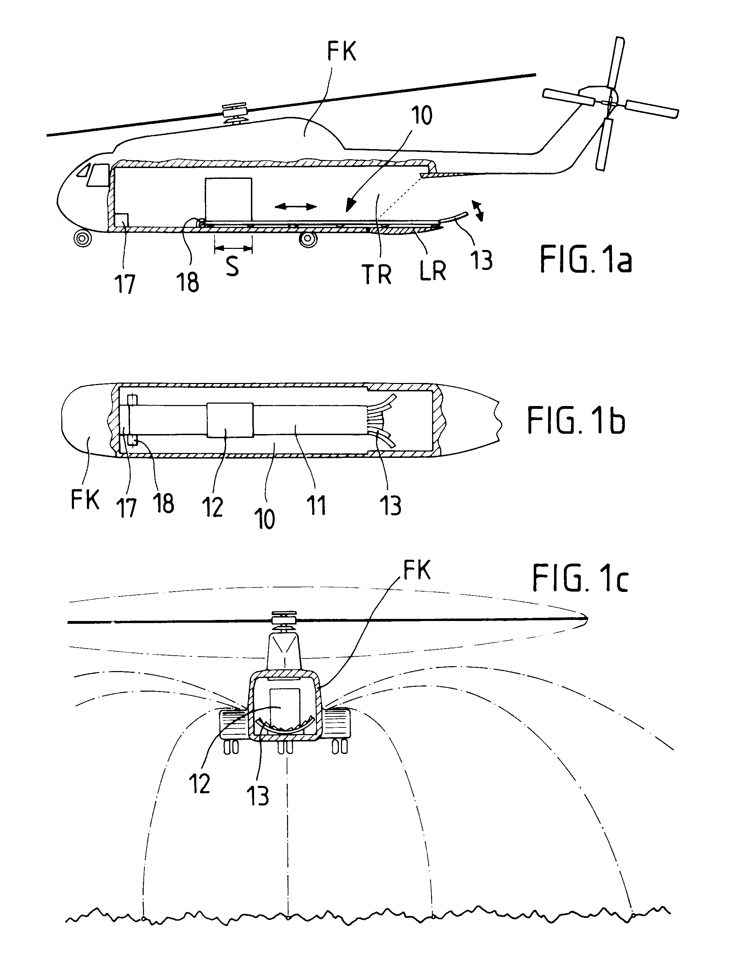

Die Fig. 1a bis 1c zeigen ein Ausführungsbeispiel eines Hubschraubers FK, der mit einer Minenausstoßeinrichtung 10 bestückt ist. Der Einbau und Ausbau dieser Einrichtung 10 kann relativ sehr schnell bewerkstelligt werden. Ist er vollzogen, so erfolgt der Einzug des fahrbaren - eventuell schlittenförmigen - Minencontainers 12 in den Transportraum TR mittels der generell im Hubschrauber FK befindlichen Seilwinde 17. Der Minencontainer 12 wird im Schwerpunktsbereich S des Hubschraubers FK abgesetzt und lagemäßig fixiert. In dem beschriebenen Ausführungsbeispiel enthält dieser Container 12 ca. 1200 Minen mit einem Gewicht von ca. 5,5 t. Der Container 12 steht gewissermaßen über der Minenausstoßeinrichtung 10, die aus einer mehrbahnigen - hier 8 Bahnen $B_1$-$B_n$ - Förderbandanlage 11 besteht, die insgesamt im Transportraum TR verschiebbar ist. Nachdem die am ausstoßseitigen Ende schwenkbar angeordnete Minenverteileinheit 13 mit der Förderbandanlage 11 verbunden worden ist, kann die Laderampe LR geschlossen werden. Die Minenausstoßeinrichtung 10 wird unter dem Minencontainer 12 bis nahe an das Cockpit verschoben und die Minenverteileinheit 13 durch das Schließen der Laderampe LR eingewinkelt.

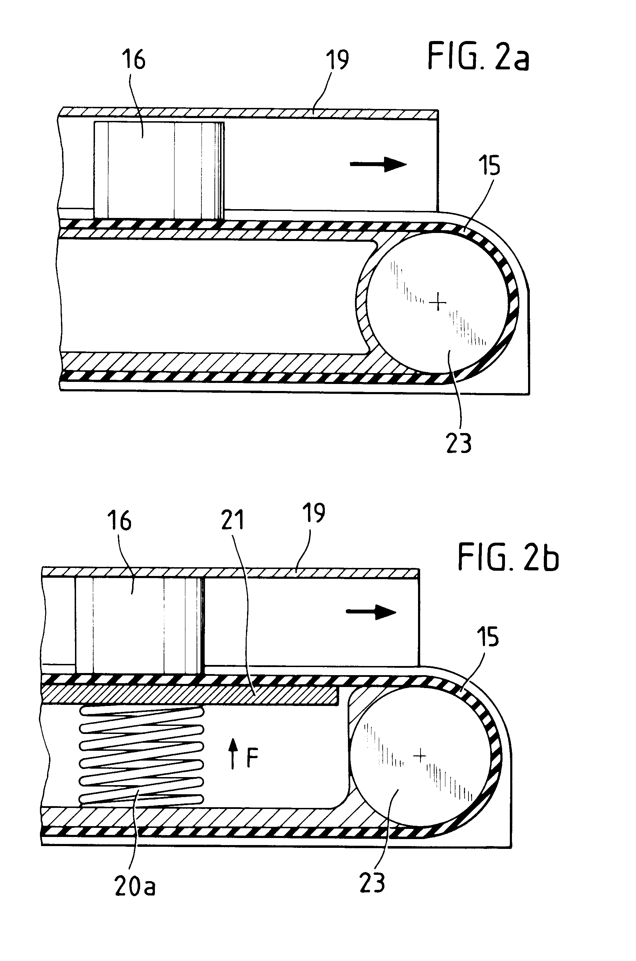

Durch Öffnen der Transportrampe LR wird die Förderbandanlage 11 mit ihrer Minenverteilheit 13 in Auswurfstellung gebracht. Die Bahnen des Förderbandes 15 werden mittels elektromotorischem Antrieb 18 durch die Ladeöffnung hindurch in Auswurfposition geschoben und mit konstanter Drehgeschwindigkeit angetrieben. In dem in Fig. 2a skizzierten Ausführungsbeispiel fallen die Minen 16 mit der für ein bestimmtes Streufeld erforderlichen Taktzeit auf das Förderband 15, das auch als Minenbeschleunigungsband bezeichnet werden kann. Eine variable Taktzeit ermöglicht die Realisierung unterschiedlicher Minendichten in beispielsweise Panzerdurchfahrtsrichtung. Aber auch variable Hubschraubergeschwindigkeiten lassen sich hierdurch kompensieren.

Der Reibungskoeffizient zwischen Mine 16 und Förderband 15 ist so ausgelegt, daß die Minen 16 über die gesamte Bandlänge eine konstante Beschleunigung erfahren. Am Ende des Förderbandes 15 entspricht die Minengeschwindigkeit der konstanten Bandgeschwindigkeit. Um diese Geschwindigkeitskomponente in optimale Wurfweiten bzw. maximale Streufeldbreiten umzusetzen, werden die Minen 16 in der Minenverteileinheit 13 umgelenkt. Hierbei wird als Optimum eine Minenauswurfumlenkung um 30° nach oben und um 60° seitlich zur Flugrichtung angesehen.

Bei der in Fig. 2a dargestellten Ausführungsversion stellt das Minenkippmoment den Grenzwert für die maximalen Beschleunigungen dar. Bei einer speziellen Minenkonzeption würde ab einem Reibwert von $\mu$ = 1.3 zwischen Mine 16 und Förderband 15 diese Mine 16 kippen. Mit einem reduzierten Reibwert auf $\mu$ = 0.8 könnten mit bestimmten Beschleunigungslängen entsprechende Auswurfgeschwindigkeiten erzielt werden. In diesem Falle würde die Minenabdeckung 19 nur als Schutzabdeckung dienen, da die Minen 16 aufgrund ihres Eigengewichts dann nicht kippen würden.

In Fig. 2b ist ein Ausführungsbeispiel skizziert, bei dem höhere Minenbeschleunigungen und damit bei gleichen Bandlängen größere Wurfweiten realisiert werden. Hierfür sind höhere Reibkräfte zwischen Mine 16 und Förderband 15 erforderlich, welche jedoch die Minen 16 zum Kippen bringen könnten. Um dies nun zu verhindern, wird die Minenschutzabdeckung 19 als definierte Minengenauflagefläche mit deutlich reduziertem Reibungskoeffizienten konzipiert. Als weitere Maßnahme ist vorgesehen, das Beschleunigungs- bzw. Förderband 15 mittels Druckfedern 20a und Reibplatte 21 mit definierter Kraft an die Mine 16 zu drücken. Die nun gewissermaßen als Führungsschiene dienende Schutzabdeckung 19 verhindert trotz der erhöhten Beschleunigung ein Kippen der Mine 16.

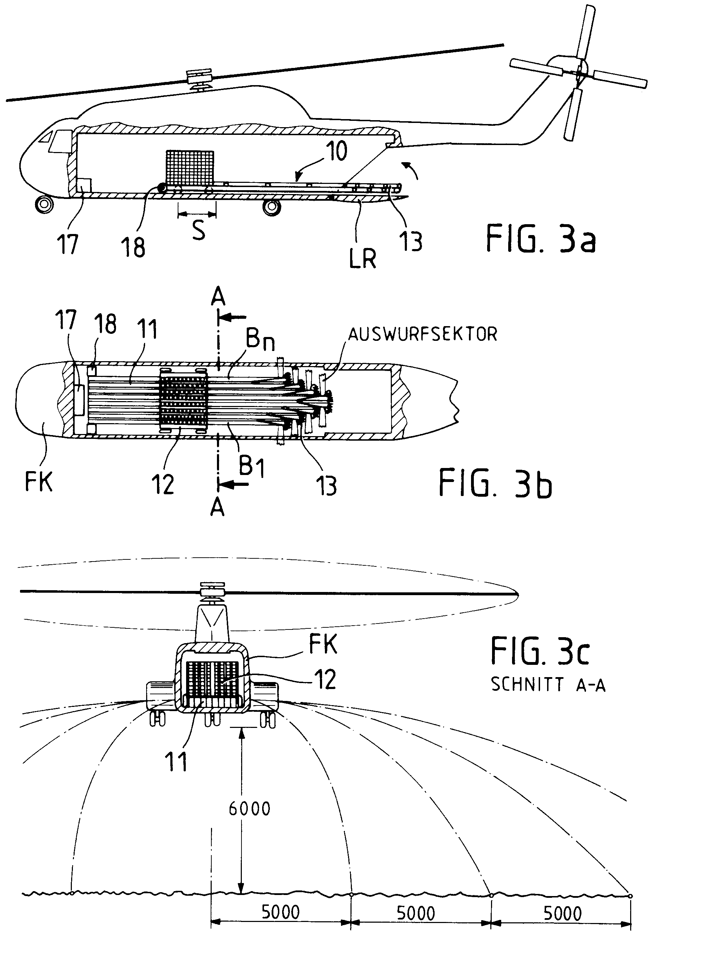

In den Figuren 3a bis 3c ist ein weiteres Ausführungsbeispiel gezeigt, bei dem die Minenverteilung mittels Auswurfelementen 20 stattfindet. Der Einbau der Anlage in den Hubschrauber FK erfolgt in derselben Weise wie bereits vorstehend beschrieben. Bei einer durchschnittlichen Minendichte von 0.4 Minen pro Meter kann damit eine Streufeldbreite von 40m mit 8 Reihen und eine Streufeldlänge von 2.8 km realisiert werden. Auch hier treibt ein oder mehrere Elektromotoren 18 die Förderbänder 15 an und zwar mit einer konstanten Geschwindigkeit von 2m/s. Ein am Förderband 15 montierter Mitnehmerzapfen 15a nimmt jeweils die unterste der im Minencontainer 12 gestapelten Minen 16 mit. Diese wird dabei zwischen dem Mitnehmerzapfen 15a und einem Auflaufrollenpaar 24 positioniert. Dieses gegenseitig versteifte Auflaufrollenpaar 24 setzt sich aus einer sogenannten Auflaufrolle 24a, welche sich gegen die Auflauffläche 26 abstützt und einer Auflaufrolle 24b, die sich am Auswurfgehäuse 27 abstützt, zusammen.

Ein reduzierter Reibkoeffizient wird durch kugelgelagerte Rollen erreicht. Der Spannhebel 25 wird kontinuierlich durch das Auflaufrollenpaar 24 des Förderbandes 15 niedergedrückt und spannt ein Federpaket 20b, das ebenfalls mit dem Auswurfgehäuse 27 gelenkig verbunden ist, welches auch dessen große Federkräfte aufnimmt. Bei größter Federspannkraft läuft das Auflaufrollenpaar 24 von der Spannhebelfläche 26 ab. Das Federpaket 20b kann sich schlagartig entspannen und beschleunigt die Mine 16 in horizontaler Richtung. Die dabei ebenfalls mitbeschleunigte Spannhebel- und Federmasse wird mittels Dämpfer abgedämpft.

**Patentansprüche**

1. Einrichtung zum Ausstoß von Minen aus Drehflüglern und Starrflüglern, wobei die Minen in fahrbaren Minencontainern gelagert, aus diesen entnommen und einer Ausstoßeinrichtung zugeführt werden, **dadurch gekennzeichnet**, daß die Minenausstoßeinrichtung (10) aus einer in Luftfahrzeuglängsrichtung verlaufenden, mehrbahnigen Förderbandanlage (11) besteht, die insgesamt in Längsrichtung verschiebbar, im Transportraum (TR) des Luftfahrzeugs unter dem im Ladeschwerpunktsbereich (S) fixierten Minencontainer (12) gelagert ist und die dessen Minen (16) an ihrem ausstoßseitigen Ende einer Minenverteileinheit (13) zuführt, von wo die Minen (16) mittels des Förderbandes (15) der einzelnen Bahnen ($B_1$ -$B_n$) oder Auswurfelementen (20) mit wählbarer Geschwindigkeit und Richtung auswerfbar sind.

2. Einrichtung nach Anspruch 1, **dadurch gekennzeichnet**, daß die Minenverteileinheit (13) mit der Laderampe (LR) des Luftfahrzeugs drehbeweglich verbunden ist und automatisch beim Öffnen der Laderampe (LR) in Auswurfstellung gebracht werden kann.

3. Einrichtung nach Anspruch 1 bis 3, **dadurch gekennzeichnet**, daß die Bahnen ($B_1$-$B_n$) der Förderbandanlage (11) durch ein oder mehrere Elektromotoren (18) in konstanter Geschwindigkeit angetrieben werden und die Mitten (16) aus dem Minencontainer (12) mit wählbarer Taktzeit auf die jeweilige Bahn ($B_1$-$B_n$) fallen.

4. Einrichtung nach Anspruch 1 oder 2, **dadurch gekennzeichnet**, daß die Minen 16 aus dem Minencontainer (12) durch die Bahnen ($B_1$-$B_n$) direkt entnommen werden, wobei die Förderbandgeschwindigkeit die jeweilige Taktzeit festlegt.

**5.** Einrichtung nach einem der Ansprüche 1 bis 4, **dadurch gekennzeichnet**, daß der Reibungskoeffizient zwischen Mine (16) und Förderband (15) so ausgelegt ist, daß eine konstante Beschleunigung der Mine (16) über die gesamte Bandlänge gewährleistet ist und am Förderbandende die Minengeschwindigkeit der konstanten Bandgeschwindigkeit entspricht.

**6.** Einrichtung nach einem der Ansprüche 1 bis 5, **dadurch gekennzeichnet**, daß die Minenverteileinheit (13) in ihren Bahnführungen so gestaltet ist, daß die Minen (16) eine Auswurfumlenkung gegenüber der Luftfahrzeuglängsachse um 30° nach oben und um 60° seitlich erfahren.

**7.** Einrichtung nach einem der Ansprüche 1 bis 6, **dadurch gekennzeichnet,** daß oberhalb des Förderbandes (15) im Abstand der Minenbauhöhe eine Minenabdeckung (19) als Minenschutzabdeckung und als Minengegenauflagefläche mit kleinem Reibkoeffizienten ausgebildet ist.

**8.** Einrichtung nach einem der Ansprüche 1 bis 7, **dadurch gekennzeichnet,** daß das Förderband (15) mittels Druckfedern (20a) und Reibplatte (21) mit definierter Kraft an die Minen (16) gedrückt wird.

**9.** Einrichtung nach einem oder mehreren der Ansprüche 1 bis 8, **dadurch gekennzeichnet,** daß die Minenverteileinheit (13) aus jeweils am Ende jeder Bahn ($B_1$-$B_n$) angeordneten, mit einem durch Federkraft betätigten Auswurfelement (20) gebildet ist, wobei dieses sich aus einem Spannhebel (25) mit einer Auflauffläche (26) und zugeordnetem Federpaket (20b) zusammensetzt.

**10.** Einrichtung nach einem oder mehreren der Ansprüche 1 bis 9, **dadurch gekennzeichnet,** daß jede Bahn ($B_1$-$B_n$) des Förderbandes (15) mit Mitnehmerzapfen (15a) für die Minen (16) und einem Auflaufrollenpaar (24) versehen ist, das an zwei sich scherenartig verjüngenden Anlageflächen entlanggezogen wird, wobei sich eine Auflaufrolle (24b) am Auswurfgehäuse (27) abstützt und die andere Auflaufrolle (24a) über die Auflauffläche (26) des Spannhebels (25) läuft.

**11.** Einrichtung nach einem oder mehreren der Ansprüche 1 bis 10, **dadurch gekennzeichnet**, daß der Spannhebel (25) kontinuierlich niedergedrückt wird und hierbei das mit dem Auswurfgehäuse (27) gekoppelte Federpaket (20b) spannt.

**12.** Einrichtung nach einem oder mehreren der Ansprüche 1 bis 11, **dadurch gekennzeichnet,** daß den Auswurfelementen (20) Dämpfungseinrichtungen zugeordnet sind.

FIG.1a

FIG.1b

FIG.1c

FIG. 2a

16    19

15

23

FIG. 2b

16    21    19

15

F

20a    23

**FIG. 3a**

S 17 18 LR 13 10

17 18 11 Bn AUSWURFSEKTOR

**FIG. 3b**

FK 12 B1 13

A A

**FIG. 3c**
SCHNITT A-A

FK 12 11

6000

5000 5000 5000

FIG. 4a

20b
ENTSPANNT

25

26

19    27

20

24

24b    24a    16    27

19    26

19    20b
VORGESPANNT

25    16    24

15a

FIG. 4b    15    27

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | FR-A-2 551 854 (SOCIETE D'ARMEMENT ET D'ETUDES SAE ALSETEX ET MATRA) | 1 | B64D1/06 |
| A | * Seite 1, Zeile 3 - Seite 3, Zeile 9 *<br>* Seite 4, Zeile 23 - Zeile 30 *<br>* Seite 12, Zeile 13 - Seite 13, Zeile 14 *<br>* Seite 25, Zeile 24 - Zeile 26; Abbildungen 1,7-10 *<br>--- | 2 | |
| Y | DE-C-3 500 163 (MESSERSCHMITT-B-B)<br>* Spalte 3, Zeile 52 - Zeile 68 * | 1 | |
| A | * Spalte 5, Zeile 26 - Spalte 6, Zeile 55; Anspruch 1; Abbildungen 2-4 *<br>--- | 3-5,8 | |
| A | EP-A-0 374 409 (MESSERSCHMITT-B-B)<br>* Seite 2, Spalte 1, Zeile 29 - Spalte 2, Zeile 5 *<br>* Seite 3, Spalte 4, Zeile 11 - Zeile 20; Anspruch 1; Abbildungen 1,7 *<br>--- | 1 | |
| A | CH-A-208 869 (SAGEB)<br>* Seite 1, Zeile 1 - Zeile 8 *<br>* Seite 1, Zeile 18 - Zeile 31 *<br>* Seite 3, Zeile 17 - Zeile 58; Abbildungen 1-3 *<br>--- | 1,8-11 | **RECHERCHIERTE SACHGEBIETE (Int. Cl.5 )**<br><br>B64D<br>F41F |
| A | AVIATION WEEK AND SPACE TECHNOLOGY.<br>Bd. 102, Nr. 17, 28. April 1975, NEW YORK US Seiten 65 - 69;<br>YAFFEE, M.: 'HELICOPTER-DROPPED MINE DEVELOPED'<br>* Seite 69, Zeile 52 - Zeile 71; Abbildungen *<br><br>----- | 1 | F42B |

Der vorliegende Recherchenbericht wurde für alle Patentansprüche erstellt

| Recherchenort | Abschlußdatum der Recherche | Prüfer |
|---|---|---|
| DEN HAAG | 13 NOVEMBER 1991 | RIVERO C.G. |